# EUROPÄISCHE PATENTSCHRIFT

(11) **EP 1 301 719 B1**
(45) Veröffentlichungstag und Bekanntmachung des Hinweises auf die Patenterteilung: **23.03.2005**
(21) Anmeldenummer: 00954579.9
(22) Anmeldetag: 31.07.2000
(51) Int. Cl.: F16B 13/06

(54) **FORMSCHLÜSSIG SETZBARER HINTERSCHNEID-ANKER**
UNDERCUT ANCHOR ELEMENT THAT CAN BE MOUNTED WITH POSITIVE ENGAGEMENT
ELEMENT D'ANCRAGE CONTRE-DEPOUILLE POUVANT ETRE MONTE PAR LIAISON DE FORME

(30) Priorität: 21.07.2000 DE 10035580
(43) Veröffentlichungstag der Anmeldung: 16.04.2003
(73) Patentinhaber: Liebig GmbH & Co. KG., 64319 Pfungstadt (DE)
(72) Erfinder: Liebig, Heinrich, 64319 Pfungstadt (DE)
(74) Vertreter: Helber, Friedrich G., Dipl.-Ing.
(86) Internationale Anmeldenummer: PCT/EP2000/007367
(87) Internationale Veröffentlichungsnummer: WO 2002/008615

(56) Entgegenhaltungen:
- DE-A- 19 520 130
- DE-C- 4 333 471
- US-A- 4 929 134
- US-A- 6 010 288
- US-A- 6 012 887

## Beschreibung

Die Erfindung betrifft einen Hinterschneid-Anker mit einem Ankerbolzen, dessen langgestreckter, an seinem in Setzrichtung rückwärtigen Ende mit einem Befestigungskopf oder einer auf einem Gewinde aufgeschraubten Mutter versehener zylindrischer Schaft an seinem in Setzrichtung vorderen Ende einen sich kegelstumpfförmig erweiternden Spannkopf aufweist, auf dem eine von seinem in Setzrichtung vorderen Ende her über einen Teil seiner Länge mehrfach geschlitzter und im geschlitzten Bereich eine Anzahl von Verankerungssegmenten bildender hülsenartiger Grundbauteil verschieblich aufgesetzt ist, dessen Innendurchmesser im Wesentlichen gleich dem bzw. etwas größer als der Außendurchmesser des zylindrischen Schaftsist und in dessen Außenseite mit Abstand vom in Setzrichtung vorderen Ende eine umlaufende Nut eingebracht ist, welche die in Setzrichtung vorderen Endbereiche der Verankerungssegmente unter Verformung des im Nutgrund verbleibenden Materials derart ausschwenkbar ausbildet, dass sie in dem in eine zugehörige Befestigungsbohrung eingesetzten Zustand durch Einleitung einer den Ankerbolzen und den Grundbauteil relativ zueinander verschiebenden Spannkraft aufgeschwenkt werden, wobei die Verankerungssegmente zusammengenommen die äußere Form von zwei mit ihren im Durchmesser kleineren Stirnflächen aneinander liegenden Kegelstumpfflächen haben, deren am in Setzrichtung vorderen Ende einerseits und an der Nut andenicht aufgeschwenkten Zustand jeweils einen dem Außendurchmesser des Grundbauteils im Wesentlichen entsprechenden oder etwas kleineren Durchmesser haben, wobei die in Setzrichtung vordere Kegelstumpffläche eine Schneidkante bildet.

Solche Hinterschneid-Anker, die sich beim Setzen in einer Befestigungsbohrung in einem Untergrund durch Eindringen einer Schneidkante in der Wandung der Befestigungsbohrung formschlüssig in der Bohrung verankert, sind in den letzten Jahren in zunehmendem Maße von Interesse geworden, weil sie eine sichere Verankerung in der Bohrung und somit Befestigung von Bauteilen auf einem Untergrund gewährleisten, ohne dass hohe radiale Kräfte auf die Bohrungswandung einwirken, wie dies bei den so genannten, sich kraftschlüssig in der Bohrung verankernden Spreizdübeln der Fall ist. Die Verwendung solcher Spreizdübel ist aufgrund der für die kraftschlüssige Verankerung erforderlichen hohen radialen Spreizkräfte nur in Untergründen aus entsprechend hoch belastbarem Beton- oder auch gewachsenem Steinoder Felsmaterial möglich, wobei auch bei an sich hinreichend belastbaren Beton-Untergründen Befestigungsbohrungen nur mit erheblichem Sicherheitsabstand von der Randbegrenzung des jeweiligen Betonbauteils vorgesehen werden können, um sicherzustellen, dass die Befestigungsbohrung beim Setzen des Spreizdübels nicht zum Rand hin ausbricht. Demgegenüber werden formschlüssig in Bohrungen zu setzende Anker an gegenüber dem Durchmesser der eigentlichen Befestigungsbohrung vergrößerten Hinterschnittfläche verankert, die entweder separat vor dem Setzen des Ankers mittels eines speziellen Hinterschnitt-Bohrwerkzeugs erzeugt werden oder die - bei den hier in Frage stehenden Hinterschneid-Ankern - vom Anker selbst beim Setzen durch Eindringen von radial in die Bohrungswandung eindringenden meißelartigen Verankerungsabschnitten eines Verankerungsbauteils des Ankers selbst erzeugt werden. Radialkräfte werden dabei nur im Eindringbereich der meißelartigen Verankerungsabschnitte in die Bohrungswandung erzeugt, d.h. sind nur auf einen kleinen Bereich der Bohrung beschränkt und auch in diesem Bereich relativ gering, weil die meißelartige Ausbildung der Verankerungsabschnitte deren Eindringen schon bei relativ geringen Radialkräften in die Bohrungswandung erlaubt. Bei einem bekannten Hinterschneid-Anker der eingangs erwähnten Art (DE 195 20 130 Al) hat der dort als Ankerhülse bezeichnete Grundbauteil eine relativ große Längserstreckung, wobei die die Verankerungssegmente bildenden Längsschlitze über die umlaufende Nut hinweg noch ein Stück weit in den geschlossenen Teil der Ankerhülse weitergeführt sind, so dass sie in dem über die umlaufende Nut hinausgeführten oberen Bereich noch einzelne Armabschnitte bilden, die unter bestimmten Bedingungen, wenn nämlich der Spannkopf beim Setzen über ein vorgegebenes zusätzliches Maß hinaus in die Verankerungssegmente eingezogen wird, aufgebogen werden können. In diesem Fall können die sich dann federnd aufweitenden Armabschnitte in Anlage an die Wandung der Befestigungsbohrung kommen und dort wiederum großflächig radiale Spreizkräfte ausüben, die mit den hier in Frage stehenden Hinterschneid-Ankern ja gerade vermieden werden sollen.

Der Erfindung liegt die Aufgabe zugrunde, den bekannten Hinterschneid-Anker so weiterzubilden, dass in jedem Falle gewährleistet ist, dass der Anker in der zugehörigen Befestigungsbohrung ausschließlich formschlüssig gesetzt wird, d.h. die Ausübung einer radialen Spreizkraft auf die Bohrungswandung in größeren Bereichen mit Sicherheit vermieden ist.

Ausgehend von einem Hinterschneid-Anker der eingangs erwähnten Art wird diese Aufgabe erfindungsgemäß dadurch gelöst, dass die die Verankerungssegmente im Grundbauteil bildenden Schlitze von dem in Setzrichtung vorderen Ende des Grundbauteils aus bis in den Bereich der umlaufenden Nut geführt sind, dass der Spannkopf in seiner axialen Erstreckung und Konizität so bemessen ist, dass die dem Grundbauteil zugewandte obere Begrenzungsfläche des Ringvorsprungs in formschlüssig gesetztem Zustand des Ankers an den freien Enden der Verankerungssegmente anliegt und ein Aufspreizen der den ersten Kegelstumpf bildenden Abschnitte der Verankerungssegmente über die Anlage an der Wandung einer zugehörigen Befestigungsbohrung hinaus verhindert, und dass die an den geschlossenen Hülsenabschnitt des Grundbauteils anschlieβenden, zusammengenommen einen ersten Kegelstumpf bildenden Abschnitte der Verankerungssegmente länger als die an diese anschließenden in Setzrichtung vorderen, zusammengenommen den zweiten Kegelstumpf bildende Abschnitte der Verankerungssegmente sind, wobei der von jeweils diametral gegenüber liegenden Erzeugenden der äußeren Begrenzungsfläche des ersten Kegelstumpfs gebildete Kegelwinkel einen spitzen Winkel von weniger als 30°, vorzugsweise weniger als 20° einschließt und der von diametral gegenüber liegenden Erzeugenden der äußeren Begrenzungsfläche des zweiten Kegelstumpfs gebildete Kegelwinkel einen stumpfen Winkel von mehr als 150°, vorzugsweise mehr als 160° einschließt, und die Erzeugenden der Begrenzungsflächen des ersten und des zweiten Kegelstumpfs sich unter einem im Bereich zwischen 85° und 95° liegenden Winkel, vorzugsweise im Wesentlichen rechtwinklig, schneiden. Dadurch ist sichergestellt, dass die Verriegelungssegmente nur um ein solches Maß ausgeschwenkt werden können, dass sie mit Ausnahme der durch die Schneidkanten ausgeübten Kräfte keine Spreizkraft auf die Bohrungswandung ausüben können.

Die die verankerungssegmente im Grundbauteil bildenden Schlitze sind dabei zweckmäßig von dem in Setzrichtung vorderen Ende des Grundbauteils aus nur bis zu der die umlaufende Nut am rückwärtigen Ende begrenzenden Nut-Seitenwand oder - wenn dies aus herstellungstechnischen Gründen erforderlich oder zweckmäßig ist - nur geringfügig über die die umlaufende Nut am rückwärtigen Ende begrenzenden Nut-Seitenwand hinaus in den im übrigen geschlossenen Abschnitt des Hülsenabschnitts des Grundbauteils geführt. Der Hülsenabschnitt des Grundbauteils ist also weitgehend ringsum geschlossen und kann sich auch bei Einwirkung hoher axialer Kräfte auf den Spannkopf nicht radial aufweiten, so dass also gewährleistet ist, dass der Grundbauteil sich auch in seinem oberhalb der verankerungssegmente liegenden Abschnitt nicht radial aufweiten kann.

Die Erfindung ist in der folgenden Beschreibung eines Ausführungsbeispiels in Verbindung mit der Zeichnung näher erläutert, und zwar zeigt:
- Fig. 1: eine perspektivische Explosionsdarstellung eines erfindungsgemäßen Hinterschneid-Ankers;
- Fig. 2: eine Schnittansicht durch den in er erfindungsgemäßen Weise ausgebildeten Anker gemäß Figur 1 in der zur Befestigung eines Bauteils in Durchsteck-montage in eine Befestigungsbohrung in einem Untergrund eingeführten Ausgangsstellung vor der formschlüssigen Festlegung des Ankers;
- Fig. 3: den bohrungsinneren Endabschnitt des in Figur 2 gezeigten Ankers in der durch Anziehen der am äußeren Ende des Ankerbolzens vorgesehenen Mutter erhaltenen Setzposition; und
- Fig. 4: eine Teilansicht des Grundbauteils und der Distanzhülse eines abgewandelten Ausführungsbeispiels des erfindungsgemäßen Hinterschneid-Ankers in der Figur 1 entsprechender perspektivischer Darstellung.

Der in den Zeichnungsfiguren dargestellte, in seiner Gesamtheit mit 10 bezeichnete Hinterschneid-Anker setzt sich aus den nachstehend noch im Einzelnen erörterten Bauteilen, nämlich einem langgestreckten Ankerbolzen 12, einem längsverschieblich auf dem zylindrischen Schaft 14 des Ankerbolzens angeordneten hülsenförmigen Grundbauteil 16, einer Distanzhülse 18, einem, beim dargestellten Ausführungsbeispiel an dem in der Zeichnung unteren Ende auf einem Gewinde 20 des Ankerbolzens 12 aufgeschraubten, mit einer Gewindebohrung 26 versehenen Spannkopf 24, der sich vom Schaft 14 des Ankerbolzens aus konisch erweitert, zusammen. Am bohrungsinneren Ende des Spannkopfs 24 ist ein umlaufender, radial vortretender und auf seiner Umfangsfläche mit einer Riffelung vorgeseher Ringvorsprung 28 vorgesehen, dessen dem Grundbauteil zugewandte obere radiale Begrenzungsfläche 28a eine Anschlagfläche bildet, deren Funktion im Folgenden noch erläutert wird. An seinem, dem Spannkopf 24 gegenüberliegenden Endbereich ist der Schaft 14 mit Gewinde 30 versehen, über welches eine Unterlegscheibe 34 bis in Anlage an das obere Ende der Distanzhülse 18 geschoben und dann eine Mutter 36 aufgeschraubt werden kann. Im speziellen Fall ist zwischen dem Grundbauteil 16 und der Distanzhülse 18 noch ein aus Kunststoff hergestellter und mit in Umfangsrichtung zueinander versetzten, radial vorstehenden und zugespitzten Zähnen versehener axial zusammendrückbarer Kunststoff-Ring 38 angeordnet, welcher als erste Drehsicherung beim Setzen des in eine Befestigungsbohrung eingeführten Hinterschneid-Ankers 10 dient und infolge seiner Zusammendrückbarkeit einen Nachspannweg zur Verfügung stellt, welcher es erlaubt, dass die Mutter 36 des gesetzten Ankers 10 nachspannbar ist und so ein mittels des Ankers montierter Bauteil 32 in jedem Falle in spielfreier Anlage auf den Untergrund aufschraubbar ist.

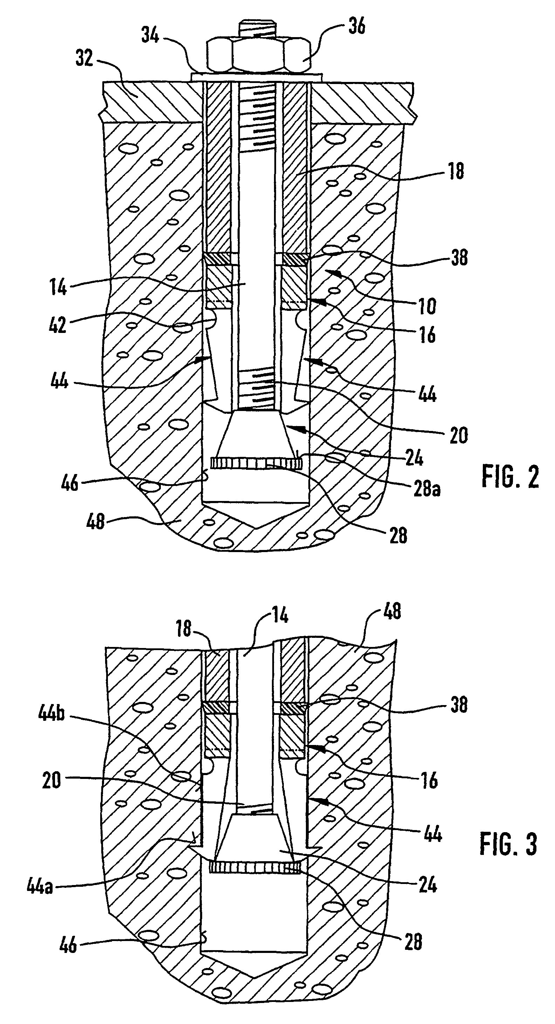

Am im Setzrichtung vorderen Ende des hülsenförmigen Grundbauteils 16 sind durch - im dargestellten Fall - von der bohrungsinneren Stirnfläche aus in gleichmäßigen Winkelabständen versetzt über einen Teil der Länge des Grundbauteils eingearbeitete Längsschlitze 40 insgesamt sechs Verankerungssegmente 44 ausgebildet, in deren Außenseite mit Abstand von dem in Setzrichtung vorderen Ende eine umlaufende Nut 42 eingestochen ist, welche die Verankerungssegmente 44 unter Verformung des im Nutgrund verbleibenden Materials ausschwenkbar ausbildet. Im dargestellten Fall sind diese Längsschlitze 40 bis zur oberen Begrenzungswand der umlaufenden Nut 42 geführt. Wenn es - z.B. aus herstellungstechnischen Gründen - erwünscht ist, können die Längsschlitze in der in Figur 4 veranschaulichten Weise auch noch ein kurzes Stück über die Nut 42 hinausgeführt werden, wobei die Verlängerungen aber so kurz gehalten sind, dass der oberhalb der Nut 42 befindliche Abschnitt des Grundbauteils 16 sich auch im Bereich der verlängerten Schlitze nicht aufweiten kann. Dadurch ist es möglich, die bis zur Anlage an den vorderen Innenkanten der Verankerungssegmente 44 auf die Umfangsfläche des Spannkopfs 24 geschobenen Verankerungssegmente durch Einziehen des Spannkopfs 24 in den Grundbauteil 16 aufzuspreizen und bei weiterem axialen Einziehen des Spannkopfs durch Drehen der Mutter 36 die Endbereiche der Verankerungssegmente entsprechend der Konizität des Spannkopfs so weit aufzuschwenken, dass an der Außenseite ihrer freien Enden gebildete Schneidkanten ins Material der Wandung einer Befestigungsbohrung 46 (Figur 2 und 3) in einem Untergrund 48, in welche der Anker 16 eingesetzt ist, einschneiden und in diesem Bereich dann einen Hinterschnitt in der Befestigungsbohrung bilden. In Figur 2 ist der erfindungsgemäße Hinterschneid-Anker 10, in eine solche Befestigungsbohrung 46 eingeführt, aber in noch nicht gesetztem Zustand dargestellt, wobei die radial äußeren Bereiche der unter der Mutter 36 angeordneten Unterlegscheibe 34 sich auf der Oberseite eines auf einem Untergrund 48, z.B. einer Betonplatte, zu befestigenden Bauteils 32 abstützt.

In Figur 3 ist der durch das Einziehen des Spannkopfs 24 in den Grundbauteil 16 bewirkte gesetzte Zustand in der Bohrung 46 gezeigt. Da die bohrungsinneren Enden der Verankerungssegmente auf ein äußeres Durchmessermaß aufgeschwenkt sind, welches größer als der Durchmesser der Befestigungsbohrung 46 ist, kann der Grundbauteil 16 und somit der Anker 10 insgesamt nur noch unter Zerstörung der Bohrung 46 aus dieser herausgezogen werden. In Auszugsrichtung wirkende Kräfte, beispielsweise die von der Mutter 36 beim Festspannen des Bauelements 32 auf den Untergrund 48 im Schaft 14 des Ankerbolzens 12 wirkenden Kräfte versuchen, den Spannkopf 24 weiter in den Grundbauteil einzuziehen, wodurch die bohrungsinneren Endbereiche der Verankerungssegmente zusätzlich im Sinne einer radialen Aufweitung verschwenkt und die formschlüssige Verriegelung der Verankerungssegmente in der Wandung des Bohrlochs sozusagen in Abhängigkeit von der über den Ankerbolzen 12 eingeleiteten Anzugskraft bzw. einer vom befestigten Bauteil 32 auf den Ankerbolzen in Ausziehrichtung ausgeübten Belastung verstärkt würde. Durch den radial vorstehenden Ringvorsprung kann der Spannkopf 24 aber nur so weit in die Verankerungssegmente 44 eingezogen werden, bis die Begrenzungsfläche 28a des Ringvorsprungs an den Endflächen der Verankerungssegmente 44 zur Anlage kommt, d.h. ein Ausschwenken der Verankerungssegmente über das - in Figur 3 dargestellte - Maß ist nicht möglich.

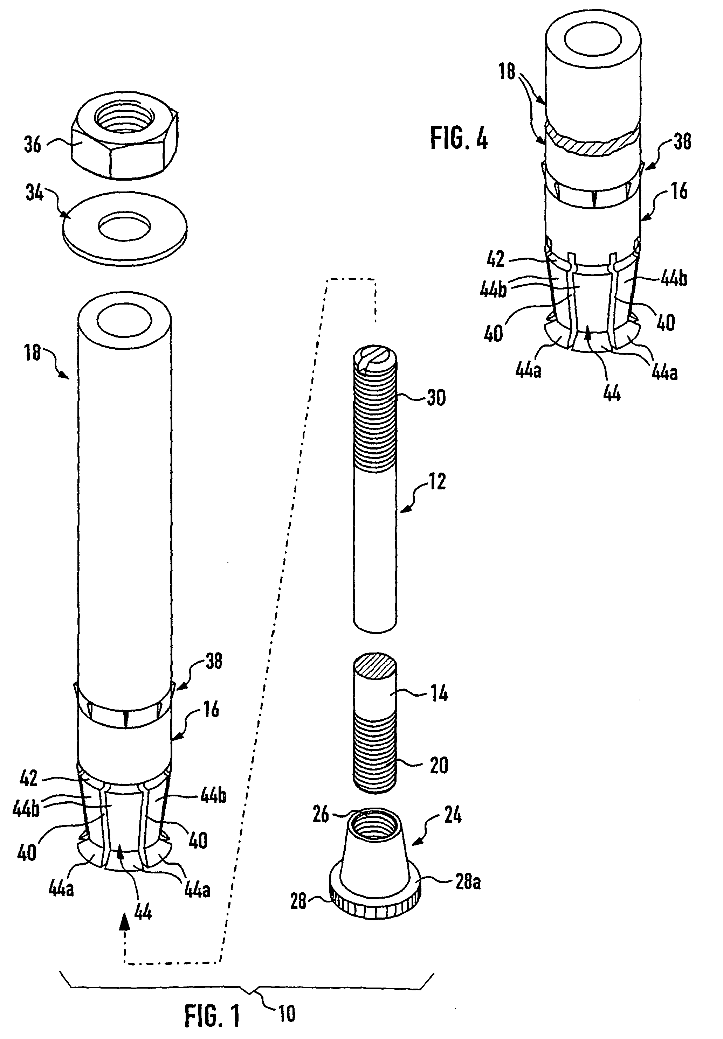

Die durch die umlaufende Nut 42 im Grundbauteil gebildeten Verankerungssegmente 44 haben zusammengenommen die in den Figuren 1, 2 und 3 erkennbare doppelkegelstumpfförmige Form, bei welcher zwei mit ihren im Durchmesser kleineren Stirnflächen aneinander liegenden Kegelstumpfflächen 44a, 44b in der Außenfläche der Verankerungssegmente eine umlaufende Einschnürung ausbilden. Die am in Setzrichtung vorderen Ende gelegene Basisfläche der Kegelstumpffläche 44a und die an der Nut 42 ausgebildete Basisfläche der Kegelstumpffläche 44b haben dabei jeweils einen dem Außendurchmesser des Grundbauteils 16 im Wesentlichen entsprechenden bzw. etwas kleineren Durchmesser. Insbesondere die am Umfang der Basisfläche der Kegelstumpffläche 44a gebildete Schneidkante sollte dabei einen etwas kleineren Durchmesser als der Grundbauteil 16 haben. Dabei ist die Ausgestaltung so getroffen, dass die am in Setzrichtung vorderen Endbereich der Verankerungssegmente 44 ausgebildeten Kegelstumpfflächen 44a einen stumpfen Kegelwinkel von mehr als 150°, vorzugsweise mehr als 160°, einschließen, während die Kegelstumpf- bzw. Begrenzungsflächen 44b des anschließenden Abschnitts der Verankerungssegmente 44 einen Kegelwinkel von weniger als 30°, vorzugsweise weniger als 20°, haben.

Infolge des stumpfen Kegelwinkels der Begrenzungsfläche 44a und des spitzen Kegelwinkels der Kegel- bzw. Begrenzungsfläche 44b treffen diese Begrenzungsflächen unter einem Winkel von etwa 90° zusammen, wobei die äußeren Ränder der Kegelstumpffläche 44a scharfkantige meißelartige Schneidkanten bilden, die beim Setzen des Ankers von der in die Befestigungsbohrung 46 zurückgezogenen Stellung gemäß Figur 2 in die in Figur 3 veranschaulichte Lage ausgeschwenkt werden, in welcher sie ins Material der Wandung der Bohrung 46 eingedrungen und dort formschlüssig verankert sind. Radial nach außen in die Wandung der Befestigungsbohrung gerichtete Kräfte treten beim Setzvorgang nur im unmittelbaren Eindringbereich der Schneidkanten in die Bohrungswandung auf und sind infolge der scharfkantigen Ausbildung der meißelartigen Schneidkanten außerdem relativ gering.

Aus dem Vergleich von Figur 2 und 3 ist auch erkennbar, dass die im Ausgangszustand (Figur 2) mit Abstand unterhalb der freien Enden der Verankerungssegmente 44 stehende radiale Begrenzungsfläche 28a in gesetztem Zustand (Figur 3) bis in Anlage an die Enden der dann ausgeschwenkten Verankerungssegmente gezogen wurde. Ein weiteres Ausschwenken der Verriegelungssegmente 44 ist also nicht möglich. Damit ist also ausgeschlossen, dass die Verankerungssegmente 44 über die in Figur 3 dargestellte Stellung hinaus so weit ausgeschwenkt werden können, dass die Kegelstumpfflächen 44b in Anlage an die Wandung der Befestigungsbohrung 46 kommen und dann - bei weiterem Ausschwenken - radiale Spreizkräfte auf die Bohrungswandung ausüben können.

Es ist ersichtlich, dass im Rahmen des Erfindungsgedankens Abwandlungen und Weiterbildungen des beschriebenen Ausführungsbeispiels verwirklichbar sind. Der Spannkopf 24, der beim beschriebenen Ausführungsbeispiel ein gesonderter, auf das Gewinde 20 des Ankerschafts aufgeschraubter Bauteil ist, kann auch integral am Schaft 14 des Ankerschafts 12 angeformt sein. Dann kann das Einziehen des Spannkopfs 24 in den Grundbauteil 16 nur durch Aufschrauben der Mutter 36 auf das Gewinde 30 am oberen Ende des Schafts 14 erfolgen. Andererseits ist auch eine Abwandlung dahingehend denkbar, dass anstelle der auf das Gewinde 30 aufgeschraubten Mutter 36 am oberen Ende des Ankerschafts ein Schraubenkopf einstückig angeformt ist. Dann ist die Ausbildung des Spannkopfs 24 als gesondert hergestellter und auf das Gewinde 20 aufgeschraubter Bauteil erforderlich, um den Spannkopf 24 in den Grundbauteil 16 einziehen zu können.

## Patentansprüche

1. Hinterschneid-Anker (10) mit einem Ankerbolzen (12), dessen langgestreckter, an seinem in Setzrichtung rückwärtigen Ende mit einem Befestigungskopf oder einer auf einem Gewinde aufgeschraubten Mutter (36) versehener zylindrischer Schaft (14) an seinem in Setzrichtung vorderen Ende einen sich kegelstumpfförmig erweiternden Spannkopf (24) mit einem an seinem freien Ende vorgesehenen radial vortretenden Ringvorsprung (28) aufweist, auf dem ein von seinem in Setzrichtung vorderen Ende her über einen Teil seiner Länge mehrfach geschlitzter und im geschlitzten Bereich eine Anzahl von Verankerungssegmenten (44) bildender hülsenartiger Grundbauteil (16) verschieblich aufgesetzt ist, dessen Innendurchmesser im Wesentlichen dem gleich dem bzw. etwas größer als der Außendurchmesser des zylindrischen Schaft (14) ist, und in dessen Außenseite mit Abstand vom in Setzrichtung vorderen Ende eine umlaufende Nut (42) eingebracht ist, welche die in Setzrichtung vorderen Endbereiche der Verankerungssegmente unter Verformung des im Nutgrund verbleibenden Materials derart ausschwenkbar ausbildet, dass sie in dem in eine zugehörige Befestigungsbohrung eingesetzten Zustand durch Einleitung einer den Ankerbolzen (12) und den Grundbauteil (16) relativ zueinander verschiebenden Spannkraft aufgeschwenkt werden, wobei die Verankerungssegmente (44) zusammengenommen die äußere Form von zwei mit ihren im Durchmesser kleineren Stirnflächen aneinander liegenden Kegelstumpfflächen haben, deren am in Setzrichtung vorderen Ende einerseits und an der Nut (42) andererseits gebildete Basisflächen im nicht aufgeschwenkten Zustand jeweils einen dem Außendurchmesser des Grundbauteils (16) im Wesentlichen entsprechenden oder etwas kleineren Durchmesser haben, wobei die in Setzrichtung vordere Kegelstumpffläche eine Schneidkante bildet,
**dadurch gekennzeichnet ,**
**dass** die die Verankerungssegmente (44) im Grundbauteil (16) bildenden Schlitze (40) von dem in Setzrichtung vorderen Ende des Grundbauteils (16) aus bis in den Bereich der umlaufenden Nut (42) geführt sind, so dass der Grundbauteil in seinem oberhalb der Verankerungssegmente liegenden Abschnitt nicht radial aufweitbar ist, dass der Spannkopf (24) in seiner axialen Erstreckung und Konizität so bemessen ist, dass die dem Grundbauteil (16) zugewandte obere Begrenzungsfläche (28a) des Ringvorsprungs (28) in formschlüssig gesetztem Zustand des Ankes (10) an den freien Enden der Verankerungssegmente (44) anliegt und ein Aufspreizen der den ersten Kegelstumpf bildenden Abschnitte (44b) der Verankerungssegmente (44) über die Anlage an der Wandung einer zugehörigen Befestigungsbohrung (46) hinaus verhindert, und
**dass** die an den geschlossenen Hülsenabschnitt des Grundbauteils (16) anschließenden, zusammengenommen einen ersten Kegelstumpf bildenden Abschnitte (44b) der Verankerungssegmente (44) länger als die an diese anschließenden in Setzrichtung vorderen, zusammengenommen den zweiten Kegelstumpf bildende Abschnitte (44a) der Verankerungssegmente (44) sind, wobei der von jeweils diametral gegenüber liegenden Erzeugenden der äußeren Begrenzungsfläche des ersten Kegelstumpfs gebildete Kegelwinkel einen spitzen Winkel von weniger als 30°, vorzugsweise weniger als 20° einschließt und der von diametral gegenüber liegenden Erzeugenden der äußeren Begrenzungsfläche des zweiten Kegelstumpfs gebildete Kegelwinkel einen stumpfen Winkel von mehr als 150°, vorzugsweise mehr als 160° einschließt, und die Erzeugenden der Begrenzungsflächen des ersten und des zweiten Kegelstumpfs sich unter einem im Bereich zwischen 85° und 95° liegenden Winkel, vorzugsweise im Wesentlichen rechtwinklig, schneiden.

2. Hinterschneid-Anker nach Anspruch 1, **dadurch gekennzeichnet, dass** die die Verankerungssegmente (44) im Grundbauteil (16) bildenden Schlitze (40) von dem in Setzrichtung vorderen Ende des Grundbauteils (16) aus bis zu der die umlaufende Nut (42) am rückwärtigen Ende begrenzende Nut-Seitenwand geführt sind.

3. Hinterschneid-Anker nach Anspruch 1, **dadurch gekennzeichnet, dass** die die Verankerungssegmente (44) im Grundbauteil (16) bildenden Schlitze (40) von dem in Setzrichtung vorderen Ende des Grundbauteils (16) aus geringfügig über die die umlaufende Nut (42) am rückwärtigen Ende begrenzende Nut-Seitenwand hinaus geführt sind.

## Claims

1. Undercut anchor element (10) with an anchor bolt (12), the elongate cylindrical shank (14) of which is provided on its end, which is to the rear in the fitting direction, with a fixing head or a nut (36) screwed onto a thread and has on its end, which is to the front in the fitting direction, a tightening head (24) which widens in the shape of a truncated cone with a radially projecting annular projection (28) provided on its free end, on which there is displaceably mounted a tubular base component (16) which has multiple slots extending from its end, which is at the front in the fitting direction, and over a part of its length and forms a number of anchoring segments (44) in the slotted region, the base component having an internal diameter substantially equal to or somewhat greater than the external diameter of the cylindrical shank (14) and having in its outer face a circumferential groove (42) spaced from the end, which is at the front in the fitting direction, wherein the groove causes the end regions of the anchoring segments, which are at the front in the fitting direction, to be pivotable outwards whilst the material remaining in the base of the groove is deformed in such a way that, in the state in which they are inserted into an associated fixing bore, they are pivoted up by the introduction of a tensional force which displaces the anchor bolt (12) and the base component (16) relative to one another, whereby the anchoring segments (44) taken together have the external shape of two truncated cone surfaces, which abut one another with their end faces of smaller diameter and of which the base surfaces formed, on the one hand, on the end which is at the front in the fitting direction and, on the other hand, on the groove (42), when they are not pivoted up, each have a diameter which substantially corresponds to or is somewhat smaller than the external diameter of the base component (16), the truncated cone surface, which is at the front in the fitting direction, forming a cutting edge, **characterised in that** the slots (4) which form the anchoring segments (44) in the base component (16) extend from the end of the base component (16), which is at the front in the fitting direction, into the region of the circumferential groove (42) so that the section of the base component situated above the anchoring components is not radially expandable, that the tightening head (24) is so dimensioned in its axial extent and conicity that the upper boundary surface (28a) of the annular projection (28) facing the base component (16) butts against the free ends of the anchoring segments (44) in the positively engaged state of the anchor element (10) and prevents spreading of the portions (44b) of the anchoring segments (44) which form the first truncated cone, beyond abutment against the wall of an associated fixing bore (46), and that the portions (44b) of the anchoring segments (44), which adjoin the closed tubular portion of the base component (16) and taken together form a first truncated cone are longer than the portions (44a) of the anchoring segments (44) which adjoin them and are at the front in the fitting direction and together form the second truncated cone, whereby the cone angle formed by generatrices of the outer boundary surface of the first truncated cone lying diametrically opposite in each case defines an acute angle of less than 30°, preferably less than 20°, and the cone angle formed by generatrices of the outer boundary surface of the second truncated cone lying diametrically opposite defines an obtuse angle of more than 150°, preferably more than 160°, and the generatrices of the boundary surfaces of the first and second truncated cone intersect at an angle in the region between 85° and 95°, preferably substantially at right angles.

2. Undercut anchor element as claimed in Claim 1, **characterised in that** the slots (40), which form the anchoring segments (44) in the base component (16), extend from the end of the base component (16), which is at the front in the fitting direction, as far as the groove side wall defining the circumferential groove (42) at the rear end.

3. Undercut anchor element as claimed in Claim 1, **characterised in that** the slots (40) which form the anchoring segments (44) in the base component (16) extend from the end of the base component (16) which is at the front in the fitting direction, slightly beyond the groove side wall defining the circumferential groove (42) at the rear end.

## Revendications

1. Elément d'ancrage contre-dépouillé (10) avec un boulon d'ancrage (12) dont l'extrémité allongée arrière dans la direction de pose avec une tête de fixation ou une tige cylindrique (14) munie d'un écrou (36) vissé sur un filetage comporte à son extrémité avant dans la direction de pose une tête de serrage (24) s'élargissant en forme de cône tronqué avec un épaulement annulaire (28) s'avançant radialement prévu à son extrémité libre sur lequel est posé de manière mobile un élément de base (16) en forme de manchon, à fentes multiples et formant un certain nombre de segments d'ancrage (44) dans la zone fendue à partir de son extrémité avant dans la direction de pose sur une partie de sa longueur, dont le diamètre intérieur est sensiblement égal au ou un peu plus grand que le diamètre extérieur de la tige cylindrique (14) et dans la face extérieure duquel est ménagée une rainure circulaire (42) à distance de l'extrémité avant dans la direction de pose dont les zones d'extrémité avant dans la direction de pose des éléments d'ancrage sont pivotantes, par déformation du matériau au fond de la rainure, de sorte qu'elles pivotent à l'état inséré dans un alésage de fixation associé du fait de l'introduction d'un effort de tension déplaçant le boulon d'ancrage (12) et l'élément de base (16) l'un par rapport à l'autre, moyennant quoi les segments d'ancrage (44) tous ensemble ont la forme extérieure de deux surfaces tronconiques posées l'une à côté de l'autre avec leurs faces frontales de plus petit diamètre, dont les surfaces de base formées, d'une part, à l'extrémité avant dans la direction de pose et, d'autre part, dans la rainure (42), à l'état non pivoté, présentent chacune un diamètre correspondant sensiblement au ou un peu plus petit que le diamètre extérieur de l'élément de base (16), moyennant quoi la surface tronconique avant dans la direction de pose forme une arête coupante,
**caractérisé en ce que**
les fentes (40) formant les segments d'ancrage (44) dans l'élément de base (16) sont guidées entre l'extrémité avant dans la direction de pose de l'élément de base (16) et la zone de la rainure circulaire (42), de sorte que l'élément de base ne peut pas s'élargir radialement dans sa portion se trouvant au dessus des segments d'ancrage,
la tête de serrage (24) est dimensionnée dans son allongement axial et sa conicité de telle manière que la surface de limitation supérieure (28a) de l'épaulement annulaire (28) tournée vers l'élément de construction de base (16) s'appuie, à l'état monté par engagement positif de l'élément d'ancrage (10), sur les extrémités libres des segments d'ancrage (44) et empêche un écartement des portions (44b) des segments d'ancrage (44) formant le premier cône tronqué au-delà de l'appui d'un alésage de fixation associé (46) sur la paroi, et
les portions (44b) des segments d'ancrage (44) raccordées à la portion fermée en forme de manchon de l'élément de base (16), formant toutes ensemble un premier cône tronqué, sont plus longues que les portions (44a) des segments d'ancrage (44) avant dans la direction de pose raccordées à ceux-ci, formant toutes ensemble le second cône tronqué, moyennant quoi l'angle de cône formé par des génératrices chacune diamétralement opposées de la surface de limitation extérieure du premier cône tronqué inclut un angle aigu de moins de 30°, de préférence de moins de 20°, et l'angle de cône formé par des génératrices diamétralement opposées de la surface de limitation extérieure du second cône tronqué inclut un angle aigu de plus de 150°, de préférence de plus de 160°, et les génératrices des surfaces de limitation du premier et du second cône tronqué se coupent selon un angle dans la plage comprise entre 85° et 95°, de préférence sensiblement à angle droit.

2. Elément d'ancrage contre-dépouillé selon la revendication 1, **caractérisé en ce que** les fentes (40) formant les segments d'ancrage (44) dans l'élément de base (16) sont guidées à partir de l'extrémité avant de l'élément de base (16) dans la direction de pose jusqu'à la paroi latérale de la rainure limitant la rainure circulaire (42) à l'extrémité arrière.

3. Elément d'ancrage contre-dépouillé selon la revendication 1, **caractérisé en ce que** les fentes (40) formant les segments d'ancrage (44) dans l'élément de base (16) sont guidées à partir de l'extrémité avant de l'élément de base (16) dans la direction de pose légèrement au-delà de la paroi latérale de la rainure limitant la rainure circulaire (42) à l'extrémité arrière.
